(19) Europäisches Patentamt
European Patent Office
Office européen des brevets

(11) **EP 1 858 214 B1**

(12) **FASCICULE DE BREVET EUROPEEN**

(45) Date de publication et mention
de la délivrance du brevet:
**21.09.2011   Bulletin 2011/38**

(51) Int Cl.:
**H04L 12/56** (2006.01)

(21) Numéro de dépôt: **07114032.1**

(22) Date de dépôt: **20.12.2001**

(54) **Procédé de routage adaptif par déflexion avec apprentissage par renforcement**

Verfahren für adaptives Routing durch Ablenkung mit Lerneffekt durch Bekräftigung

Adaptive routing method by deflection with reinforcement learning

(84) Etats contractants désignés:
**DE GB IT**

(30) Priorité:  **22.12.2000   FR 0016929**

(43) Date de publication de la demande:
**21.11.2007   Bulletin 2007/47**

(62) Numéro(s) de document de la (des) demande(s)
initiale(s) en application de l'article 76 CBE:
**01403317.9 / 1 235 391**

(73) Titulaire: **COMMISSARIAT A L'ENERGIE
ATOMIQUE**
**75015 Paris (FR)**

(72) Inventeurs:
 • **Derou-Madeline, Dominique**
  **75015 Paris (FR)**
 • **Herault, Laurent**
  **38640, Claix (FR)**

(74) Mandataire: **Carpmaels & Ransford
One Southampton Row
London
WC1B 5HA (GB)**

(56) Documents cités:
 • **MIR-FAKHRAEI N: "Evaluation of an ATM LAN
  constructed with a cyclic deflection-routing
  network" COMPUTER COMMUNICATIONS,
  ELSEVIER SCIENCE PUBLISHERS BV,
  AMSTERDAM, NL, vol. 21, no. 7, 15 juin 1998
  (1998-06-15), pages 662-669, XP004132234 ISSN:
  0140-3664**
 • **CHOUDHURY A K ET AL: "EFFECT OF
  CONTENTION RESOLUTION RULES ON THE
  PERFORMANCE OF DEFLECTION ROUTING"
  COUNTDOWN TO THE NEW MILENNIUM.
  PHOENIX, DEC. 2 - 5, 1991, PROCEEDINGS OF
  THE GLOBAL TELECOMMUNICATIONS
  CONFERENCE. (GLOBECOM), NEW YORK, IEEE,
  US, vol. 3, 2 décembre 1991 (1991-12-02), pages
  1706-1711, XP000313692 ISBN: 0-87942-697-7**

Printed by Jouve, 75001 PARIS (FR)

**Description**

Domaine de l'invention

L'invention concerne un procédé de routage adaptatif par déflexion d'objets circulant dans un réseau de routeurs, dans lequel les objets déjà présents dans le réseau sont prioritaires sur les objets qui demandent à y entrer.

L'invention s'applique aux réseaux de routeurs dans lesquels circulent des objets à acheminer à une destination, fixée à l'avance, via un chemin optimum. En particulier, l'invention peut s'appliquer aux réseaux de télécommunications pour le transfert de paquets d'informations. Elle peut aussi s'appliquer à des réseaux de logistiques pour le routage de colis ou de lettres sur des chaînes de tris, dans des entreprises de transport.

L'invention peut également s'appliquer aux réseaux routiers pour aider au déplacement de véhicules, en évitant au mieux les zones encombrées, afin de faire transiter les véhicules d'un point à un autre le plus rapidement possible, tout en évitant les chocs avec d'autres véhicules.

Etat de la technique

Il existe actuellement plusieurs types de procédés de gestion d'un réseau de routeurs, appelés aussi « procédés de routage ».

L'un de ces procédés est le procédé du Q-LEARNING, qui est décrit notamment dans l'article de T. JAAKKOLA, M. JORDAN et S. SINGH, intitulé « Convergence of stochastic iterative dynamic programming algorithms », in Advances in Neural Information Processing Systems, volume 6, pages 703 - 710, 1993, et dans l'article de C. WATKINS and P. DAYAN, intitulé « Technical note on Q-Learning », Machine Learning, 8(3), pages 279 - 292, 1992.

Une méthode de Q-LEARNING utilisant une méthode d'apprentissage par renforcement est décrite dans l'article de J. BOYAN and M. LITTMAN, « Packet routing in dynamically changing networks : a reinforcement learning approach », dans Advances in Neural Information Processing Systems, volume 6, pages 671 - 678, 1993. Cet article explique le problème que l'on cherche à résoudre : lorsqu'un objet P arrive sur un routeur x avec, comme destination finale, le routeur d, alors le routeur x doit décider, à partir d'informations locales qui lui sont propres, vers lequel de ses voisins routeurs y, il doit aiguiller l'objet P, afin que ce dernier arrive dans les meilleurs délais à sa destination finale. Dans ce document, J. BOYAN et M. LITTMAN proposent de résoudre le problème en estimant le temps nécessaire à l'objet P pour aller du routeur x au routeur d, en utilisant une méthode d'apprentissage par renforcement.

Dans cette méthode, tous les objets arrivent soit en provenance de la file d'attente externe, soit des liens internes du réseau, dans une file tampon, qui permet de temporiser les objets avant leur routage, via le routeur. Il est donc nécessaire de prendre en compte, dans l'équation de mise à jour des valeurs Q, la longueur de la file d'attente externe du routeur courant x. Ainsi, les valeurs $Q_x(d,y)$ fournissent une indication de l'estimation du temps nécessaire à l'objet pour atteindre sa destination d, à partir de x, en étant routé sur y. Les valeurs Q tiennent compte du temps de trajet restant à parcourir et de l'encombrement du routeur voisin, ce temps étant indicatif du temps nécessaire aux objets présents dans la file d'attente externe de y pour rentrer dans le réseau et, donc, indicatif du temps d'attente, engendré pour l'objet en x, non prioritaire sur les objets de la file d'attente externe, du voisin y.

Avec une telle méthode, il n'est pas possible de donner la priorité systématiquement aux objets présents dans le réseau, puisque tout objet entré dans le réseau est prioritaire. En effet, dans cette méthode, et dans le cas où la priorité serait donnée aux objets présents dans le réseau, l'encombrement des files d'attente externes des routeurs n'influe pas sur le temps de trajet d'un objet circulant à l'intérieur du réseau et ne permet pas d'estimer le retard induit par la charge des voisins des routeurs.

Cette méthode ne peut donc pas résoudre les problèmes de routage des objets dans un réseau, dans lequel on donne la priorité aux objets déjà présents dans le réseau.

Ce procédé du Q-LEARNING associé à une méthode d'apprentissage par renforcement, est appelée « méthode du Q-ROUTING ». Cette méthode présente l'avantage d'être très efficace et de permettre d'obtenir une solution proche de celle fournie par l'algorithme classique du « chemin le plus court », lorsqu'il y a une faible charge de trafic sur le réseau. Lorsque la charge de trafic augmente, cette méthode reste très efficace, bien qu'elle nécessite une courte période d'adaptation. De plus, cette méthode du Q-ROUTING adapte sa stratégie de routage à des modifications occasionnelles de la topologie du réseau.

Ces avantages sont obtenus par le fait que les décisions de routage sont prises localement et que les valeurs qui, seules, permettent la prise de décision de routage, sont réunies dans une table unique, cette table contenant à la fois les informations de charge du trafic du réseau et les informations d'adresses physiques des routeurs.

Cependant, ce procédé présente l'inconvénient suivant : le système doit apprendre un chemin optimal avec une charge stationnaire ; dès que la charge change, un nouvel apprentissage est nécessaire et celui-ci est très lent. De plus, lorsque la charge de trafic diminue, le procédé de Q-ROUTING n'a pas la capacité de renconverger rapidement vers l'efficacité initiale (c'est-à-dire le plus court chemin), du fait que, seules, les données concernant les routeurs visités sont mises à jour. Il y a ainsi un effet d'hystérésis dans l'apprentissage des tables de routage.

Cette inertie d'adaptation aux variations de trafic est très gênante, en pratique, car elle empêche toute absorption de la sporadicité, incontournable dans la plupart des applications.

Pour éviter cet effet d'hystérésis, un procédé a été décrit dans l'article de S. CHOI and D. YEUNG, intitulé « Prédictive Q-routing : a memory-based reinforcement learning approach to adaptative traffic control », submitted to Neural Information Processing Systems. Ce document propose d'utiliser un trafic de sondes ; pour cela, des objets « sondes » sont envoyés vers des routeurs dont les valeurs Q sont très élevées et non modifiées depuis longtemps, afin de mettre à jour les valeurs Q correspondantes. Pour cela, ce document propose de prédire, au moyen d'une extrapolation linéaire, quelles sont les corrections à apporter aux valeurs Q, avant de les évaluer, pour trouver la meilleure affectation des objets sur les sorties. Cependant, cette méthode nécessite l'utilisation de quatre tables, au niveau de chaque routeur, ce qui augmente considérablement les temps de traitement.

Une autre méthode pour éviter l'effet d'hystérésis, pourrait consister à utiliser du bruit thermodynamique dans le mécanisme de choix de l'affectation $\psi$, afin de garantir une bonne exploration de l'espace des états. Cette méthode est bonne lorsque le taux de charge est homogène. Cependant, comme l'apprentissage doit être continuel dans l'environnement instationnaire du réseau, il apparaît difficile de contrôler une loi de descente de pseudo-température.

"Evaluation of an ATM LAN constructed with a cyclic deflection-routing network", Nader Mir-Fakhraei, Computer Communications, Elsevier Science Publishers BV, Amsterdam, NL, vol. 21, no. 7, 15 Juin 1998, pages 662-669 divulgue la conception et l'évaluation des performances d'un réseau local ATM construit avec le réseau Manhattan Street (MSN). Le MSN possède une structure cyclique et appartient à la catégorie des réseaux de routage par déflexion. La structure de l'élément de commutation avec l'utilisation de la mise en mémoire tampon partagée et du mécanisme de contrôle du débit est présentée. Avec des mémoires tampons partagées, le réseau fonctionne efficacement étant donné que l'occurrence des déflexions est minimisée. Le multicasting de cellules sous routage par déflexion est traité en utilisant la technique du recyclage de cellules et via les modes relais et copie. Un modèle de mise en file d'attente analytique est développé pour le réseau et les résultats numériques de l'analyse de performance du trafic sont comparés aux résultats d'une simulation distincte. Le facteur d'accélération (avantage de vitesse) dont le réseau a besoin pour devenir un réseau local pratique est déterminé.

"Effect of Contention Resolution Rules on the Performance of Deflection Routing". Choudhury A K et al; Countdown to the New Millennium. Phoenix, Dec 2-5, 1991; Proceedings of the Global Telecommunications Conference (Globecom), New York, IEEE, US, Vol. 3, 2 Décembre 1991, pages 1706-1711 divulgue une recherche sur l'effet des règles de résolution de contention (CR) sur les performances du routage par déflexion. Une nouvelle règle CR prioritaire exempte d'interblocage, qui est basée sur une distance de paquet jusqu'à la destination et sur le nombre de déflexions qu'il subit, est proposée. Les performances sont comparées en termes de débit moyen, de retard de réseau moyen et de distribution de retard de cette règle CR avec d'autres règles CR fréquemment utilisées. Les résultats montrent que les règles CR prioritaires améliorent les performances dans les réseaux utilisant un routage par déflexion non mis en mémoire tampon. Toutefois, l'on observe que les règles CR prioritaires n'ont guère d'effet sur les performances du routage par déflexion mis en mémoire tampon. Ces résultats donnent à penser que l'utilisation de la règle CR aléatoire avec les mémoires tampons de sortie est un meilleur moyen d'améliorer les performances que l'application de règles CR complexes qui sacrifient la vitesse de commutation inhérente au routage par déflexion.

Exposé de l'invention

L'invention a justement pour but de remédier aux inconvénients des procédés de routage décrits précédemment.

A cette fin, elle propose un procédé de gestion d'un réseau de routeurs, basé sur la technique d'apprentissage par renforcement, dans lequel la priorité est donnée aux objets déjà présents dans le réseau, sur ceux qui demandent à y entrer.

Plus précisément, l'invention concerne un procédé de routage adaptatif d'objets dans un réseau numérique comportant une pluralité de routeurs reliés entre eux par des liens, chaque routeur comportant :

- M liens entrants et M liens sortants ;
- une file d'attente interne ;
- une file d'attente externe ;
- un buffer de routage de taille M ; et
- un module de traitement ;

chaque routeur étant associé à une table de routage comportant des valeurs relatives à l'estimation du nombre de déflexions subies par chaque objet au départ de ce routeur, pour une destination donnée,
ledit procédé comprenant une première étape d'initialisation de la table de valeurs associée à chaque routeur, puis une étape de traitement récurrent de chaque lien du réseau consistant à :

a) détecter si au moins un objet est arrivé sur au moins un routeur ;

b) considérer chaque lien du réseau et regarder s'il y a au moins un objet sur ces liens ;

- si oui, déplacer les objets le long des liens d'une unité de temps ;
- si non, attendre une unité de temps ;

c) considérer chaque routeur du réseau et pour chacun détecter l'état de ses liens entrants ;

- si la présence d'un objet est détectée sur un lien entrant et que la destination de cet objet est le routeur considéré, alors ledit objet étant arrivé à destination, il est sorti du réseau ;
- si aucun objet à destination de ce routeur n'est détecté sur les liens entrants, alors vérifier l'état de la file d'attente interne :

  • si la file d'attente contient des objets, alors transférer ces objets dans le buffer du routeur ;
  • si ledit buffer n'est pas plein, alors vérifier si des objets sont en attente dans la file d'attente externe et remplir le buffer avec une partie au moins des objets en attente dans cette file d'attente externe,

caractérisé en ce qu'il consiste à :

d) affecter le contenu du buffer de routage sur les liens sortants du routeur en fonction de la table de routage associée et estimer dynamiquement le nombre de déflexions que les objets subiront en aval du routeur pour atteindre leur destination ;

e) mettre à jour les valeurs de la table de routage associée pour estimer le nombre de déflexions subies, sur tout le trajet, par les objets.

Avantageusement, à l'arrivée d'un objet, chaque routeur envoie au routeur précédent un accusé de réception indiquant le nombre de déflexions estimées, subies par l'objet pour aller jusqu'au routeur de destination.

Selon un mode de réalisation de l'invention, les étapes c) à e) sont effectuées successivement pour chaque routeur.

Selon un autre mode de réalisation de l'invention, les étapes c) à e) sont effectuées pour chaque routeur simultanément.

L'étape c) du procédé de l'invention peut consister à prendre en compte les informations contenues dans les accusés de réception envoyés par tous les routeurs voisins, pour la mise à jour des tables de routage.

Brève description des figures

- La figure 1 représente schématiquement un exemple de réseau de routeurs, reliés par des liens bidirectionnels ;
- la figure 2 représente le diagramme fonctionnel d'un routeur du réseau de la figure 1 ;
- les figures 3A, 3B, etc., représentent l'organigramme général du procédé de l'invention.

Description détaillée de modes de réalisation de l'invention

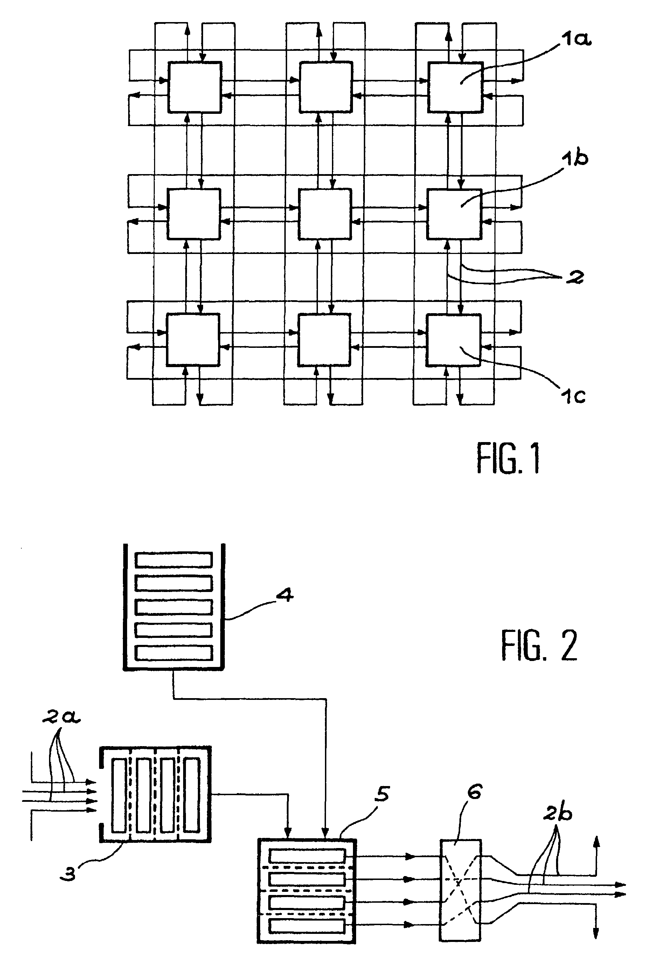

Sur la figure 1, on a représenté schématiquement un exemple de réseau de routage comportant plusieurs routeurs reliés les uns aux autres par des liens bidirectionnels. Dans cet exemple, le réseau comporte 3 X 3 routeurs.

Sur cette figure 1, on a référencé 1a, 1b, 1c, etc., les différents routeurs du réseau et on a représenté, par des flèches, les liens entrants et sortants qui relient les routeurs deux-à-deux. La référence 2 représente ces liens bidirectionnels entre deux routeurs.

Ces liens assurent la circulation des objets entre les routeurs. Ces objets sont caractérisés chacun par leur destination. Chaque objet transite dans le réseau, par un ou plusieurs routeurs, jusqu'à ce qu'il atteigne sa destination. Pour se faire, les objets entrent dans le réseau par un routeur d'entrée, cheminent dans le réseau de routeur en routeur, le long des liens et sortent du réseau par le routeur correspondant à leur destination.

Chaque routeur a des liens entrants et des liens sortants. Le rôle des routeurs est de « router » les objets en transit, c'est-à-dire de déterminer une affectation pour les objets qui se présentent à leur entrée et de les faire sortir par une de leur sortie. Pour cela, chaque routeur comporte ses propres moyens de décision. Il peut ainsi être chargé de diriger les objets qui lui arrivent, en fonction des destinations demandées pour ces objets, en optimisant la qualité de service et en gérant au mieux les éventuels conflits.

Sur la figure 2, on a représenté schématiquement le fonctionnement d'un routeur du réseau de routeurs, représenté sur la figure 1.

Comme on le voit sur cette figure, chaque routeur comporte des liens entrants, référencés 2a, et des liens sortants, référencés 2b. Les liens entrants 2a sont les liens qui proviennent d'un routeur voisin. Les objets transmis par ces liens entrants 2a sont placés dans une file d'attente interne, référencée 3, c'est-à-dire une file d'attente qui contient uniquement des objets provenant d'autres routeurs du réseau. Parallèlement à cette file d'attente interne 3, le routeur comporte une file d'attente externe 4, dans laquelle sont placés les objets demandant à entrer dans le réseau.

Ces deux files d'attente 3 et 4, de tailles limitées, sont connectées à un buffer de routage 5, dans lequel sont introduits les prochains objets à diriger dans le réseau, vers d'autres routeurs. Comme on le verra plus précisément par la suite, ce buffer de routage, de taille limitée M, est rempli en priorité par les objets contenus dans la file d'attente interne 3 et, lorsqu'il reste de la place, par les objets présents dans la file d'attente externe 4.

Des moyens de décision 6, propres à chaque routeur, assurent la décision d'affectation de chaque objet contenu dans le buffer de routage 5. Ils affectent les objets présents dans le buffer de routage sur les liens sortants du routeur. Autrement dit, ce sont ces moyens de décision 6 qui déterminent si l'objet présent dans le buffer de routage est arrivé à destination, ou bien s'il doit être dirigé vers un autre routeur du réseau, afin d'arriver à sa destination.

Les liens sortants 2b sont connectés à ces moyens de décision 6. Ces liens sortants 2b contiennent donc les objets dont la destination n'était pas le routeur considéré, mais un autre routeur du réseau, le routeur considéré ayant dirigé ces objets vers d'autres routeurs voisins.

Le réseau de routage, qui vient d'être décrit, a donc pour but d'acheminer le trafic d'objets de leur source à leur destination, en garantissant une qualité de service. En fonction de l'application, cette qualité de service peut être simplement la rapidité ou bien un choix de cheminement particulier, par exemple pour éviter les chocs dans l'application au trafic routier.

Dans le réseau, qui vient d'être décrit, le routage est « distribué », c'est-à-dire que la décision de routage n'est pas centralisée, mais au contraire distribuée dans chaque routeur du réseau. Ainsi, chaque routeur du réseau est équipé de moyens de décision autonomes (référencé 6), qui lui permettent, à un instant donné, de considérer tous les objets qu'il a à transmettre et d'adapter sa décision de routage à chaque objet, en fonction de son environnement.

Ce réseau de routage agit par déflexions, une déflexion étant l'écart entre le chemin suivi réellement par l'objet et le chemin théorique prévu initialement, sans tenir compte du trafic. Autrement dit, ce mode de routage consiste à répartir très rapidement, sur les liens de sortie, les objets arrivant à un instant donné sur les liens entrant du routeur. Ainsi, quand deux objets arrivent sur le même routeur, et que ces objets désirent prendre la même sortie, l'un des objets prend cette sortie et l'autre objet est défléchi, c'est-à-dire qu'il est envoyé sur un autre lien qui n'avait pas sa préférence. Ce concept permet de fournir un mode de règlement rapide des conflits à l'intérieur du routeur.

Chaque routeur du réseau est associé à une table de valeur qui contient les estimations du nombre de déflexions nécessaires pour aller du routeur considéré, à tout autre routeur du réseau, par les M sorties du routeur considéré. Plus précisément, dans le cas où le critère de qualité est la durée de transit, la table de valeurs contient toutes les informations d'estimations du temps requis pour aller du routeur considéré à un autre routeur du réseau, par l'une des M sorties de ce routeur.

Les tables de valeurs des routeurs sont mises à jour, grâce à des accusés de réception envoyés chacun par le routeur considéré au routeur précédent, via le lien qui relie ces deux routeurs. Ces accusés de réception indiquent le nombre estimé de déflexions subies par l'objet pour aller du routeur considéré au routeur de destination.

Autrement dit, la table de valeurs du routeur x contient les estimations du nombre de déflexions nécessaires pour aller de ce routeur à tous les autres routeurs du réseau par les M sorties du routeur x. Dans le cas où le critère de qualité est la durée de trajet, cette table contient toutes les informations d'estimation du temps requis pour aller de x à tout autre routeur du réseau, par l'une des sorties M de x.

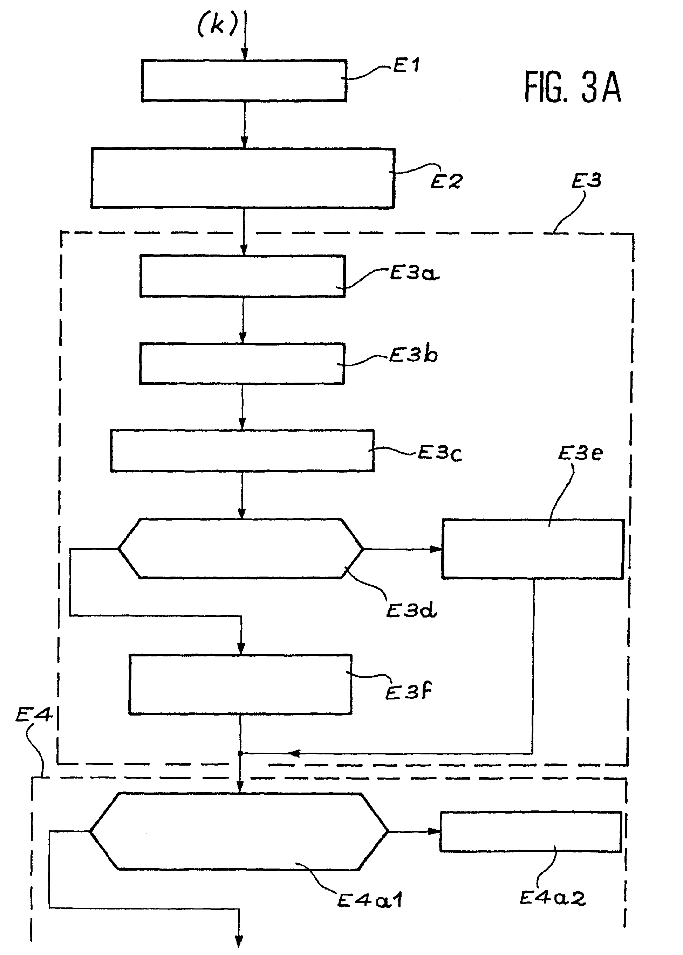

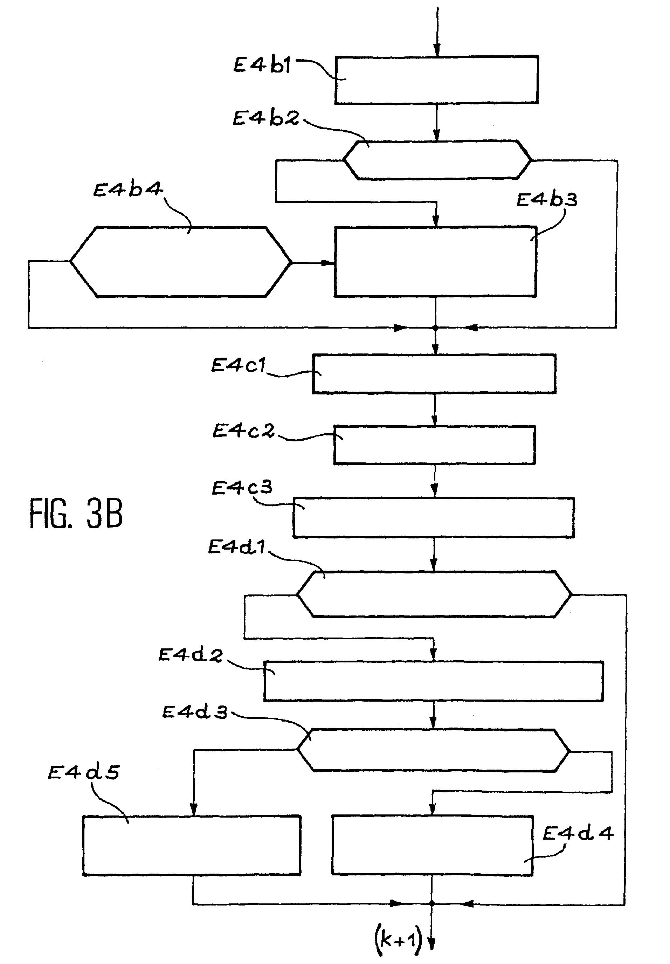

Sur la figure 3, on a représenté, de façon schématique, l'organigramme montrant les différentes étapes du procédé de l'invention.

La première étape, référencée E1, est une étape d'initialisation. Dans cette étape, toutes les variables, utilisées dans le procédé de l'invention, sont initialisées. Ainsi :

- $\psi$ est une configuration d'affectation. Si N objets sont à router, la configuration d'affectation $\psi$ est composée de N affectations $y_i(\psi)$;
- $S_x(d,y)$ est une distance entre x et d en sortant par le routeur y;
- $S_x(d_i, y_i(\psi))$ est une distance entre x et $d_i$ en sortant par le routeur $y_i(\psi)$ ;
- $P_{transit} = \{P_i(S_i, d_i)\}$ est l'ensemble des objets en transit : chaque objet $P_i$ vient du routeur voisin $s_i$ et a la destination $d_i$ ;
- $\eta \in [0,1[$ est le taux d'apprentissage ;
- $\gamma \in [0,1[$ est le taux d'oubli ;
- $Q_x(d_{i,y})$ est une estimation du nombre de déflexions subies par les objets allant de x à $d_i$, en sortant de x par y. Le nombre de déflexions est calculé par rapport à la sortie au plus court chemin topologique.

En particulier, la table $Q_x$ du routeur x est initialisée de la façon suivante :

$$Q_x^{t\,=\,0}(d,\,y) = 0 \text{ si } S_x(d,\,y) = \min_{y' \text{ voisin de } x}(S_x(d,\,y')) \tag{1}$$

$$Q_x^{t\,=\,0}(d,\,y) = 1 \text{ sinon}$$

Le procédé de l'invention se poursuit par une succession d'itérations (étapes E2 à E4), chaque itération correspondant à l'arrivée de nouveaux objets dans les files d'attente extérieures et au déclenchement de tous les routeurs du réseau, afin d'admettre d'éventuels objets provenant de l'extérieur et de router les objets provenant des routeurs voisins.

L'organigramme de la figure 3 représente le procédé de l'invention pour l'itération k. Lorsque toutes les étapes de l'organigramme ont été effectuées pour cette itération k, le procédé est répété pour l'itération k + 1.

Le nombre T d'itérations n'est limité que par le temps CPU, que l'on souhaite accorder au procédé, T étant toutefois suffisant pour rendre compte du comportement du réseau.

Chaque itération, dans le procédé de l'invention, comporte deux étapes :

- l'étape E2, qui correspond à l'arrivée de nouveaux objets sur certains routeurs, ou sur l'ensemble des routeurs du réseau ; et
- l'étape E3, qui correspondant au parcours de tous les liens du réseau et au déplacement des objets le long de ces liens.

Plus précisément, dans l'étape E2, de nouveaux objets arrivent sur certains routeurs du réseau, afin de transiter à travers le réseau. Ces nouveaux objets sont caractérisés par leur destination, c'est-à-dire par l'adresse de leur routeur de destination. Chaque nouvel objet est placé en queue de la file d'attente externe du routeur devant lequel il se présente.

L'étape E3 consiste à traiter les objets présents dans les liens du réseau. Plus précisément, cette étape E3 consiste, tout d'abord, à traiter séquentiellement tous les liens du réseau (sous-étape E3a). Elle consiste ensuite, dans une sous-étape E3b, à traiter séquentiellement tous les objets contenus dans chaque lien. Tout objet présent sur le lien considéré est alors avancé d'une case le long du lien (sous-étape E3c), chaque « case » correspondant au déplacement d'un objet sur un lieu pendant une unité de temps.

L'étape E3 consiste ensuite à vérifier, dans une sous-étape E3d, si le déplacement implique que l'objet arrive sur un routeur ; si c'est le cas, alors l'objet est placé dans une file d'attente interne du routeur (étape E3f). Si ce n'est pas le cas, alors la nouvelle position de l'objet sur le lien est enregistrée (étape E3e) et sera prise en compte pendant l'étape E3, à la prochaine itération.

Le procédé de l'invention se poursuit par une étape E4, qui consiste à parcourir, dans un ordre séquentiel aléatoire, tous les routeurs du réseau et à réaliser, sur chacun de ces routeurs, un certain nombre d'opérations. Ces opérations peuvent être réalisées sur tous les routeurs simultanément ou bien sur chaque routeur successivement.

L'étape E4 se divise en sous-étapes E4a à E4d. L'étape E4a consiste, avant de procéder à l'admission de nouveaux objets dans la file d'attente interne, à étudier la liste des objets présents dans cette file d'attente interne et, en particulier, leurs destinations. Les objets présents dans cette file d'attente interne qui sont arrivés à destination (dans ce cas, leur destination est le routeur considéré) sont délivrés et retirés du réseau.

Plus précisément, cette étape E4a consiste en un test E4a1, qui vérifie si les objets contenus dans la file d'attente interne ont pour destination l'adresse du routeur considéré. Si c'est le cas, alors ces objets sont livrés lors de l'étape E4a2. Si ce n'est pas le cas, alors on passe à l'étape E4b, qui remplit le buffer de routage.

Cette étape E4b comporte, tout d'abord, une étape E4b1, qui consiste à transférer les objets contenus dans la file d'attente interne, et non délivrés (c'est-à-dire qui ne sont pas arrivés à destination), dans le buffer de routage. Bien sûr, ce sont les objets les plus anciens contenus dans la file d'attente qui sont transférés en premier dans le buffer de routage. S'il n'y a pas suffisamment de place dans le buffer de routage, seule une partie des objets contenus dans cette file d'attente interne est transférée dans le buffer de routage.

Un test E4b2 consiste ensuite à vérifier si le nombre d'objets BR dans le buffer de routage est bien inférieur à M, c'est-à-dire au nombre de places disponibles dans le buffer. Si c'est le cas, alors le procédé de l'invention consiste à regarder dans la file d'attente externe (test E4b4) s'il y a des objets présents. Si c'est le cas, alors les objets présents sur la file d'attente externe sont introduits dans le buffer de routage, de façon à remplir le buffer de routage. Autrement dit, pour un buffer de routage de taille M, s'il y a BR objets déjà placés dans le buffer (objets provenant de la file d'attente interne), alors il est possible d'introduire, dans le buffer, M - BR, objets provenant de la file d'attente externe. Par contre, si à l'étape E4b2, il s'avère que le buffer de routage est déjà entièrement rempli par les objets qui proviennent de la file d'attente interne, alors aucun objet provenant de file d'attente externe n'est introduit dans le buffer de routage.

En effet, dans ce mode de routage, le routeur peut router au maximum M objets, simultanément, soit un objet par sortie.

Ce procédé donne ainsi la priorité aux objets en transit, c'est-à-dire aux objets déjà présents dans le réseau de routeurs. Les nouveaux objets ne peuvent entrer dans le réseau que s'il y a de la place disponible. Ce procédé garantit qu'un objet ne peut être « tué » dans le réseau, c'est-à-dire retiré du réseau tant que son routage n'est pas terminé.

Le procédé de l'invention se poursuit par l'étape E4c de routage, proprement dit, des objets, cette étape de routage étant la détermination, pour tous les objets présents dans le buffer de routage, du routeur de destination et de la sortie sur laquelle on affecte l'objet.

Dans le procédé de l'invention, chaque routeur a une stratégie globale lui permettant d'estimer grossièrement la trajectoire des objets qu'il doit router, afin qu'ils atteignent leur destination en évitant les régions denses du réseau, ce qui a priori minimise les risques de collision, et en évitant aussi de s'engager dans les régions bouchées. Dans ce procédé, le routeur a également une stratégie locale lui permettant de déterminer une affectation admissible, c'est-à-dire de ne pas donner la même sortie à deux objets différents.

Ainsi, au niveau d'un routeur, la stratégie consiste à viser, pour chaque objet à router, le chemin optimal, s'il est disponible, ou un chemin sous-optimal, en donnant la priorité à l'évitement des collisions, par le moyen des déflexions.

Le principe de routage par déflexion consiste à répartir les objets de la file d'attente interne sur les M sorties du routeur, en fonction des destinations désirées par les objets. En d'autres termes, le procédé consiste à trouver une configuration d'affectation des objets présents dans la file d'attente interne, optimale au sens des critères choisis.

Le procédé de l'invention propose d'utiliser des indicateurs internes au trafic du réseau. L'indicateur interne choisi est l'estimation dynamique du nombre de déflexions que les objets devront subir, en aval du routeur considéré, pour atteindre leur destination. Ainsi, les objets seront routés, de manière à minimiser le nombre global de déflexions qu'ils auront à subir.

Une fois l'affectation déterminée, les objets sont transférés instantanément sur les sorties du routeur.

L'étape E4c du procédé de l'invention consiste, d'abord, à sélectionner la meilleure configuration d'affectation dynamique (étape E4c1), par exemple celle qui minimise le temps de trajet estimé. Elle consiste, ensuite, à router des objets en appliquant cette configuration optimale (étape E4c2). Enfin, l'étape E4c3 consiste à envoyer des accusés de réception aux routeurs précédents pour les informer que les objets ont bien été routés. En d'autres termes, si n objets $P_i(s_i,d_i)$ doivent être routés en un routeur x, alors il faut :

- sélectionner la meilleure configuration d'affectation dynamique $\tilde{\psi}$ :

$$\tilde{\psi} = \arg\min_\psi \sum_{i=1}^{n} \left( S_x(d_i, y_i(\psi)) + 2.Q_x(d_i, y_i(\psi)) \right) \qquad (Eq.\ 1)$$

- router les objets suivants la configuration optimale $\tilde{\psi}$, i. e. affecter à chaque objet $P_i$ la sortie $y_i(\tilde{\psi})$ ;
- envoyer au routeur d'origine $s_i$ de l'objet $P_i(s_i,d_i) \in P_{transit}$ un accusé de réception :

$$t_x(d_i) = Q_x(d_i, y_i(\tilde{\psi})) \qquad (Eq.\ 2)$$

où $y_i(\tilde{\psi})$ désigne la sortie effectivement empruntée par l'objet $P_i(s_i,d_i)$.

En effet, le routage se fait sur la base de la valeur $S_x(d_i,y_i(\tilde{\psi})) + 2.Q_x(d_i,y_i(\tilde{\psi}))$, dans laquelle $S_x(d_i,y_i(\tilde{\psi}))$ représente la distance du plus court chemin pour que l'objet i aille de x à sa destination $d_i$, en empruntant la voie $y_i(\tilde{\psi})$. Comme $Q_x(d_i,y_i(\tilde{\psi}))$ désigne le nombre de déflexions estimé sur le trajet le plus suivi pour aller de x à $d_i$, en passant par $y_i(\tilde{\psi})$ lors des dernières itérations, la variable $S_x(d_i,y_i(\tilde{\psi}))$ représente l'estimation du nombre de routeurs que l'objet i traversera sur son trajet, en sortant par $y_i(\tilde{\psi})$. Puisque tous les liens sont, par hypothèse, de la même longueur, cette valeur est directement proportionnelle au temps de transit. En conséquence, le routage se fait par l'optimisation du temps de transit des objets, ce temps étant estimé dynamiquement à l'aide d'un indicateur interne (par exemple, le nombre de déflexions subies).

Le procédé de l'invention se poursuit par l'étape E4d, qui consiste à mettre à jour la table des valeurs de routage. La mise à jour de la table des valeurs de routage se fait de la façon suivante :

A chaque routeur x, est associée une table $T_x$, qui lui est propre :

$$T_x = \{Q_x(d, z) / z \in v(x), d : \text{routeur du réseau}\}$$

avec

- $v(x)$ : ensemble des routeurs voisins de x ;
- $Q_x(d,z)$ : une valeur associée au triplet (routeur x, destination d, sortie z).

Plus précisément, l'étape E4d comporte un test E4d1 destiné à vérifier si un accusé de réception a été reçu par le routeur x, en provenance d'un routeur voisin $y_i$, pour la destination $d_i$. Si c'est le cas, alors, pour tous les routeurs y voisins de x (étape E4d2), on vérifie, dans une étape E4d3, si y est la sortie correspondant au routeur d'où provient l'accusé de réception. Si c'est le cas, alors la table des valeurs Q est mise à jour selon le mode « apprentissage » (étape E4d4). Si ce n'est pas le cas, alors la table des valeurs est mise à jour selon le mode « désapprentissage » (étape E4d5). Par contre, si aucun accusé de réception n'a été reçu par le routeur x, à l'étape E4d1, alors on passe directement à la fin du procédé, pour l'itération k.

Cette étape E4d peut s'écrire de la façon suivante :

Pour tout y appartenant au voisinage de x :

- si $y = y_i$, i. e. y est la sortie correspondant au routeur d'où provient l'accusé de réception, alors :

$$Q_x(d_i, y) := (1 - \eta) . Q_x(d_i, y) + \eta(q_x(d_i, y) + t_y(d_i)) \qquad (\text{Eq. 3})$$

où $q_x(d_i,y) = 1$, si y n'appartient pas à un des plus courts chemins topologiques entre x et $d_i$ (déflexion) et $q_x(d_i,y) = 0$ sinon.

Sinon :

$$Q_x(d_i, y) := \gamma . Q_x(d_i, y) + (1 - \gamma) . Q_x^{t = 0}(d_i, y) \qquad (\text{Eq. 4})$$

Cette estimation dynamique est donc réalisée en prenant en compte le fait que, lors de la mise à jour de la table de routage, le routage a défléchi ou non l'objet. La mise à jour de la table de routage utilise l'information de l'affectation choisie pour les précédents objets, déjà passés par le routeur x considéré. On obtient ainsi une information sur l'encombrement du réseau.

Le procédé de mise à jour des valeurs de $Q_x$, selon le mode « apprentissage », est le suivant.

$$Q_x(d_i, y) := (1 - \eta) . Q_x(d_i, y) + \eta . (q_x(d_i, y) + t_y(d_i))$$

dans laquelle :

- $q_x(d_i,y) = 1$, si y n'appartient pas à un des plus courts chemins topologiques entre x et $d_i$ (i. e. s'il y a déflexion) et $q_x(d_i,y) = 0$, sinon ;
- $t_x(d_i) = Q_x(d_i, y_i(\tilde{\psi}))$ et $y_i(\tilde{\psi})$ désigne la sortie attribuée à l'objet P$i$ par l'affectation $\tilde{\psi}$.

Dans l'équation (Eq. 3), le coût immédiat de l'action décidée par la procédure de routage est égal à $q_x(d_i,y)$, qui vaut 1 (pénalisation) si le routage impose une déflexion à l'objet routé et qui vaut 0, sinon (non pénalisante).

Grâce à cette expression, en régime stationnaire, le système va dynamiquement apprendre une valeur $Q_x(d_{i,y})$, indiquant le nombre de déflexions que l'objet sera susceptible de subir, s'il emprunte la sortie y pour aller de x à $d_i$.

L'emploi de la sortie $y_i(\widetilde{\psi})$, sortie effectivement empruntée par l'objet $P_i(s_i,d_i)$, est capital. En effet, c'est grâce à lui que la connaissance des chemins effectivement parcourus par les objets, pourra être propagée à travers le réseau.

Le procédé de mise à jour, selon le mode « désapprentissage » consiste, à chaque itération, à mettre à jour systématiquement la table des valeurs Q, indépendamment de l'apprentissage dû au trafic, au moyen de la formule de mise à jour :

$$Q_x(d_i, y) := \gamma.Q_x(d_i, y) + (1 - \gamma).Q_x^{t\,=\,0}(d_i, y$$

avec $\gamma \in [0,1]$. Dans cette formule, le désapprentissage par le facteur d'oubli est appliqué, pour chaque affectation d'un objet $P_i$ se trouvant en x, allant de $d_i$ et étant routé sur le moteur $y_i$ par la procédure de routage, sur les trois routeurs voisins de x différents de y. L'objectif est de revenir lentement vers les valeurs initiales du plus court chemin, en l'absence de trafic, afin d'améliorer l'adaptation du réseau lors d'un passage d'une phase de fort trafic à une phase de faible trafic. Le phénomène d'hystérésis est ainsi atténué et il est possible de réaliser le routage d'objets dans un trafic non-stationnaire.

Les valeurs $Q_x(d_i,y)$ sont ainsi modifiées à chaque itération de deux façons possibles.

La première façon correspond à l'apprentissage et est associée à un éventuel retour d'informations en provenance des voisins.

La seconde façon est associée à un désapprentissage, c'est-à-dire à un oubli partiel des anciennes valeurs ; elle concerne, pour le couple $(x,d_i)$, les sorties y, autres que celles de laquelle provient l'accusé de réception reçu. En l'absence de message de retour en provenance des voisins, les valeurs Q convergent géométriquement vers leur valeur de référence. Il y a donc une concurrence entre la dynamique d'apprentissage des tables de valeurs et la dynamique doublée. La vitesse d'oubli est réglée par le paramètre $\gamma$. Le choix de $\gamma$ est important ; en effet, s'il est trop faible, l'algorithme oublie plus vite qu'il n'apprend et altère alors les performances du Q-routing : s'il est trop grand, le procédé peut être mal adapté à la sporadicité du trafic.

Ainsi, le procédé de l'invention permet de router des objets dans un réseau de routeurs, dans lequel la priorité est donnée aux objets déjà présents dans le réseau. En outre, il permet une adaptation aux conditions de trafic non stationnaire. Le routage, utilisé dans ce procédé, s'adapte automatiquement à la charge du réseau, chaque routeur estimant l'encombrement du réseau, ce qui évite d'envoyer les objets dans des zones du réseau, qui sont encombrées.

Dans ce qui suit, d'autres modes de réalisation préférés de l'invention seront présentés.

Selon un autre aspect, un procédé de routage adaptatif d'objets est prévu dans un réseau comportant une pluralité de routeurs reliés entre eux par des liens, chaque routeur comportant:

- M liens entrants et M liens sortants ;
- une file d'attente interne ;
- une file d'attente externe ;
- un buffer de routage de taille M; et
- un module de traitement,

chaque routeur étant associé à une table de routage comportant des valeurs relatives à l'estimation du nombre de déflexions subies par chaque objet au départ de ce routeur, pour une destination donnée, ledit procédé comprenant une première étape d'initialisation de la table de valeurs associée à chaque routeur, puis une étape de traitement récurrent de chaque lien du réseau consistant à :

a) détecter si au moins un objet est arrivé sur au moins un routeur ;
b) considérer chaque lien du réseau et regarder s'il y a au moins un objet sur ces liens ;

- si oui, déplacer les objets le long des liens d'une unité de temps ;
- si non, attendre une unité de temps ;

c) considérer chaque routeur du réseau et pour chacun détecter l'état de ses liens entrants ;

- si la présence d'un objet est détectée sur un lien entrant et que la destination de cet objet est le routeur considéré, alors ledit objet étant arrivé à destination, il est sorti du réseau ;
- si aucun objet à destination de ce routeur n'est détecté sur les liens entrants, alors vérifier l'état de la file d'attente interne :

- si la file d'attente interne contient des objets, alors transférer ces objets dans le buffer de routage du routeur ;
- si ledit buffer n'est pas plein, alors vérifier si des objets sont en attente dans la file d'attente externe et remplir le buffer avec une partie au moins des objets en attente dans cette file d'attente externe,

caractérisé en ce qu'il consiste à :

d) affecter le contenu du buffer de routage sur les liens sortants du routeur en fonction de la table de routage associée et estimer dynamiquement le nombre de déflexions que les objets subiront en aval du routeur pour atteindre leur destination ;

e) mettre à jour les valeurs de la table de routage associée pour estimer le nombre de déflexions subies, sur tout le trajet, par les objets.

Selon un premier mode de réalisation dudit autre aspect, il est prévu qu'à l'arrivée d'un objet, chaque routeur envoie au routeur précédent, un accusé de réception indiquant le nombre estimé de déflexions subies par l'objet pour aller jusqu'au routeur de destination.

Selon un deuxième mode de réalisation dudit autre aspect ou du premier mode de réalisation dudit autre aspect, les étapes c) à e) sont effectuées successivement pour chaque routeur.

Selon un troisième mode de réalisation dudit autre aspect ou du premier mode de réalisation dudit autre aspect, les étapes c) à e) sont effectuées pour chaque routeur, simultanément.

Selon un quatrième mode de réalisation de quelconque dudit autre aspect ou du premier, deuxième ou troisième mode de réalisation dudit autre aspect, l'étape c) consiste à prendre en compte les informations contenues dans les accusés de réception envoyés par tous les routeurs voisins pour la mise à jour des tables de routage.

**Revendications**

1. Procédé de routage adaptif pour des objets dans un réseau, le réseau comprenant une pluralité de routeurs de réseau (1a, 1b, 1c) reliés par des liens (2), dans lequel chaque routeur de réseau (1a, 1b, 1c) comprend des points de connexion pour une pluralité de liens entrants (2a) et une pluralité de liens sortants (2b), une file d'attente interne (3), une file d'attente externe (4), et un buffer de routage (5), et dans lequel chaque routeur de réseau (1a, 1b, 1c) est adapté pour accéder à une table de routage associée comprenant des valeurs relatives à une estimation d'un nombre de déflexions rencontrées par chaque objet provenant du routeur de réseau (1a, 1b, 1c) pour une destination donnée, ledit procédé consistant à:

   a) détecter qu'au moins un objet est arrivé sur au moins un routeur de réseau (1a, 1b, 1c),

   b) déplacer ledit au moins un objet le long du lien (2) pour une unité de temps en réponse audit au moins un objet étant sur quelconque des liens de réseau (2), et attendre une unité de temps en réponse à une absence dudit au moins un objet sur quelconque des liens de réaeau (2);

   c) sortir l'objet détecté en réponse à un objet étant sur un lien entrant (2a) pour un routeur de réseau (1a,1b, 1c) particulier et en réponse à la destination de celui-ci étant le routeur de réseau (1a, 1b, 1c) particulier; vérifier l'état de la file d'attente interne (3) du routeur de réseau (1a, 1b, 1c) particulier en réponse à l'absence de tout objet ayant le routeur de réseau (1a, 1b, 1c) particulier comme destination sur les liens entrants (2a) du routeur de réseau (1a, 1b, 1c) particulier; transférer ledit au moins un objet dans le buffer de routage (5) du routeur de réseau (1a, 1b, 1c) particulier en réponse à la file d'attente interne (3) du routeur de réseau (1a, 1b, 1c) particulier comprenant au moins un objet; et remplir le buffer (5) avec un ou plusieurs de quelconque des objets en attente dans la file d'attente externe (4) en réponse au buffer de routage (5) du routeur de réseau (1a, 1b, 1c) particulier étant moins que plein;

   d) affecter au moins une partie des liens sortants (2b) du routeur de réseau (1a, 1b, 1c) particulier à un contenu du buffer de routage (5) en fonction de la table de routage associée, et estimer dynamiquement un nombre de déflexions qu'un objet est attendu à rencontrer dans le réseau, en aval du routeur de réseau (1a, 1b, 1c) particulier, pour atteindre sa destination; et

   e) mettre à jour les valeurs de la table de routage associée pour estimer le nombre de déflexions rencontrées par l'objet sur tout son chemin du réseau.

2. Procédé selon la revendication 1, dans lequel, à l'arrivée de l'objet à un routeur de destination, ledit routeur de destination envoie un accusé de réception à un routeur précédent, indiquant un nombre de déflexions rencontrées par l'objet pour atteindre le routeur de destination.

**EP 1 858 214 B1**

3. Procédé selon la revendication 2, dans lequel l'étape c) en outre consiste à mettre à jour des tables de routage de réseau, au moins en partie sur la base d'un accusé de réception reçu par un ou plusieurs routeurs (1a, 1b, 1c) voisins.

4. Procédé selon la revendication 2, dans lequel les étapes c) à e) sont effectuées successivement pour chaque routeur de réseau (1a, 1b, 1c)

5. Procédé selon la revendication 2, dans lequel les étapes c) à e) sont effectuées simultanément pour chaque routeur de réseau (1a, 1b, 1c)

6. Procédé selon la revendication 1, dans lequel les étapes c) à e) sont effectuées successivement pour chaque routeur de réseau (1a, 1b, 1c).

7. Procédé selon la revendication 1, dans lequel les étapes c) à e) sont effectuées simultanément pour chaque routeur de réseau (1a, 1b, 1c).

8. Procédé selon la revendication 7, dans lequel l'étape c) en outre comprend mettre à jour des tables de routage de réseau, au moins en partie sur la base d'un accusé de réception envoyé par un ou plusieurs routeurs de réseau (1a, 1b, 1c) voisins.

9. Moyen lisible par ordinateur sur lequel sont enregistrées des commandes qui, si exécutées par une plateforme informatique, conduisent à un routage adaptif pour les objets dans un réseau, dans lequel le réseau comprend une pluralité de routeurs de réseau (1a, 1b, 1c) reliés par des liens (2), dans lequel chaque routeur de réseau (1a, 1b, 1c) comprend des points de connexion pour une pluralité de liens entrants (2a) et une pluralité de liens sortants (2b), une file d'attente interne (3), une file d'attente externe (4), et un buffer de routage (5), et dans lequel chaque routeur de réseau (1a, 1b, 1c) est adapté pour accéder à une table de routage associée comprenant des valeurs relatives à une estimation d'un nombre de déflexions rencontrées par chaque objet provenant du routeur de réseau (1a, 1b, 1c) pour une destination donnée, le routage adaptif étant effectué par:

a) détecter qu'au moins un objet est arrivé sur au moins un routeur de réseau (1a, 1b, 1c);
b) déplacer ledit au moins un objet le long du lien (2) pour une unité de temps en réponse audit au moins un objet étant sur quelconque des liens de réseau (2); et attendre une unité de temps en réponse à une absence dudit au moins un objet sur quelconque des liens de réseau (2);
c) sortir l'objet détecté en réponse à un objet étant sur un lien entrant (2a) pour un routeur de réseau (1a, 1b, 1c) particulier et en réponse à la destination de celui-ci étant le routeur de réseau (1a, 1b, 1c) particulier; vérifier l'état de la file d'attente interne du routeur de réseau (1a, 1b, 1c) particulier en réponse à l'absence de tout objet ayant le routeur de réseau particulier comme destination sur les liens entrants (2a) du routeur de réseau (1a, 1b, 1c) particulier; transférer ledit au moins un objet dans le buffer de routage (5) du routeur de réseau (1a, 1b, 1c) particulier en réponse à la file d'attente interne (3) du routeur de réseau (1a, 1b, 1c) particulier comprenant au moins un objet; et remplir le buffer (5) avec un ou plusieurs de quelconque des objets en attente dans la file d'attente externe (4) en réponse au buffer de routage (5) du routeur de réseau (1a, 1b, 1c), particulier étant moins que plein;
d) affecter au moins une partie des liens sortants (2b) du routeur de réseau (1a, 1b, 1c) particulier à un contenu du buffer de routage (5) en fonction de la table de routage associée, et estimer dynamiquement un nombre de déflexions qu'un objet est attendu à rencontrer dans le réseau, en aval du routeur de réseau (1a, 1b, 1c) particulier, pour atteindre sa destination; et
e) mettre à jour les valeurs de la table de routage associée pour estimer le nombre de déflexions rencontrées par l'objet sur tout son chemin du réseau.

**Claims**

1. Method of adaptive routing for objects in a network, the network comprising a plurality of network routers (1a, 1b, 1c) connected by links (2), in which each network router (1a, 1b, 1c) comprises connection points for a plurality of incoming links (2a) and a plurality of outgoing links (2b), an internal queue (3), an external queue (4), and a routing buffer (5), and in which each network router (1a, 1b, 1c) is adapted for accessing an associated routing table comprising values relating to an estimation of a number of deflections encountered by each object originating from the network router (1a, 1b, 1c) for a given destination, the said method consisting in:

a) detecting that at least one object has arrived at at least one network router (1a, 1b, 1c),

b) moving the said at least one object along the link (2) for a unit of time in response to the said at least one object being on any of the network links (2), and waiting a unit of time in response to an absence of the said at least one object on any of the network links (2);

c) extracting the object detected in response to an object being on an incoming link (2a) for a particular network router (1a, 1b, 1c) and in response to the destination of the latter being the particular network router (1a, 1b, 1c); verifying the state of the internal queue (3) of the particular network router (1a, 1b, 1c) in response to the absence of any object having the particular network router (1a, 1b, 1c) as destination on the incoming links (2a) of the particular network router (1a, 1b, 1c); transferring the said at least one object into the routing buffer (5) of the particular network router (1a, 1b, 1c) in response to the internal queue (3) of the particular network router (1a, 1b, 1c) comprising at least one object; and filling the buffer (5) with one or more of any of the objects waiting in the external queue (4) in response to the routing buffer (5) of the particular network router (1a, 1b, 1c) being less than full;

d) assigning at least part of the outgoing links (2b) of the particular network router (1a, 1b, 1c) to a content of the routing buffer (5) as a function of the associated routing table, and dynamically estimating a number of deflections that an object is expected to encounter in the network, downstream of the particular network router (1a, 1b, 1c), in reaching its destination; and

e) updating the values of the associated routing table so as to estimate the number of deflections encountered by the object over the whole of its network path.

2. Method according to Claim 1, in which, on the arrival of the object at a destination router, the said destination router dispatches an acknowledgement of receipt to a previous router, indicating a number of deflections encountered by the object in reaching the destination router.

3. Method according to Claim 2, in which step c) furthermore consists in updating network routing tables, at least in part on the basis of an acknowledgement of receipt received by one or more neighbouring routers (1a, 1b, 1c).

4. Method according to Claim 2, in which steps c) to e) are performed successively for each network router (1a, 1b, 1c).

5. Method according to Claim 2, in which steps c) to e) are performed simultaneously for each network router (1a, 1b, 1c).

6. Method according to Claim 1, in which steps c) to e) are performed successively for each network router (1a, 1b, 1c).

7. Method according to Claim 1, in which steps c) to e) are performed simultaneously for each network router (1a, 1b, 1c).

8. Method according to Claim 7, in which step c) furthermore comprises updating network routing tables, at least in part on the basis of an acknowledgement of receipt dispatched by one or more neighbouring network routers (1a, 1b, 1c).

9. Means readable by computer on which are recorded commands which, if executed by a computerized platform, lead to an adaptive routing for the objects in a network, in which the network comprises a plurality of network routers (1a, 1b, 1c) connected by links (2), in which each network router (1a, 1b, 1c) comprises connection points for a plurality of incoming links (2a) and a plurality of outgoing links (2b), an internal queue (3), an external queue (4), and a routing buffer (5), and in which each network router (1a, 1b, 1c) is adapted for accessing an associated routing table comprising values relating to an estimation of a number of deflections encountered by each object originating from the network router (1a, 1b, 1c) for a given destination, the adaptive routing being performed by:

a) detecting that at least one object has arrived at at least one network router (1a, 1b, 1c);

b) moving the said at least one object along the link (2) for a unit of time in response to the said at least one object being on any of the network links (2); and waiting a unit of time in response to an absence of the said at least one object on any of the network links (2);

c) extracting the object detected in response to an object being on an incoming link (2a) for a particular network router (1a, 1b, 1c) and in response to the destination of the latter being the particular network router (1a, 1b, 1c); verifying the state of the internal queue of the particular network router (1a, 1b, 1c) in response to the absence of any object having the particular network router as destination on the incoming links (2a) of the particular network router (1a, 1b, 1c); transferring the said at least one object into the routing buffer (5) of the particular network router (1a, 1b, 1c) in response to the internal queue (3) of the particular network router (1a, 1b, 1c) comprising at least one object; and filling the buffer (5) with one or more of any of the objects waiting in the external queue (4) in response to the routing buffer (5) of the particular network router (1a, 1b, 1c) being less than full;

d) assigning at least part of the outgoing links (2b) of the particular network router (1a, 1b, 1c) to a content of the routing buffer (5) as a function of the associated routing table, and dynamically estimating a number of deflections that an object is expected to encounter in the network, downstream of the particular network router (1a, 1b, 1c), in reaching its destination; and

e) updating the values of the associated routing table so as to estimate the number of deflections encountered by the object over the whole of its network path.

**Patentansprüche**

1. Adaptives Routing-Verfahren für Objekte in einem Netz, wobei das Netz eine Vielzahl von Netz-Routern (1a, 1b, 1c) enthält, die durch Links (2) verbunden sind, wobei jeder Netz-Router (1a, 1b, 1c) Verbindungspunkte für eine Vielzahl von eingehenden Links (2a) und eine Vielzahl von ausgehenden Links (2b), eine innere Warteschlange (3), eine äußere Warteschlange (4) und einen Routing-Buffer (5) enthält, und wobei jeder Netz-Router (1a, 1b, 1c) geeignet ist, um auf eine zugeordnete Routing-Tabelle zuzugreifen, die Werte bezüglich einer Schätzung einer Anzahl von Ablenkungen enthält, auf die jedes vom Netz-Router (1a, 1b, 1c) kommende Objekt für eine gegebene Zieladresse trifft, wobei das Verfahren darin besteht:

   a) zu erfassen, dass mindestens ein Objekt an mindestens einem Netz-Router (1a, 1b, 1c) angekommen ist,

   b) das mindestens eine Objekt entlang des Links (2) für eine Zeiteinheit als Antwort darauf zu verschieben, dass das mindestens eine Objekt sich auf einem beliebigen der Netz-Links (2) befindet, und eine Zeiteinheit als Antwort auf eine Abwesenheit des mindestens einen Objekts auf einem beliebigen der Netz-Links (2) abzuwarten,

   c) das erfasste Objekt als Antwort darauf, dass ein Objekt sich auf einem eingehenden Link (2a) für einen bestimmten Netz-Router (1a, 1b, 1c) befindet, und als Antwort darauf auszugeben, dass dessen Zieladresse der bestimmte Netz-Router (1a, 1b, 1c) ist; den Zustand der inneren Warteschlange (3) des bestimmten Netz-Routers (1a, 1b, 1c) als Antwort auf die Abwesenheit jeglichen Objekts, das den bestimmten Netz-Router (1a, 1b, 1c) als Zieladresse hat, auf den eingehenden Links (2a) des bestimmten Netz-Routers (1a, 1b, 1c) zu überprüfen; das mindestens eine Objekt in den Routing-Buffer (5) des bestimmten Netz-Routers (1a, 1b, 1c) als Antwort darauf zu übertragen, dass die innere Warteschlange (3) des bestimmten Netz-Routers (1a, 1b, 1c) mindestens ein Objekt enthält; und den Buffer (5) mit einem oder mehreren beliebigen der in der äußeren Warteschlange (4) wartenden Objekte als Antwort darauf zu füllen, dass der Routing-Buffer (5) des bestimmten Netz-Routers (1a, 1b, 1c) weniger als voll ist;

   d) mindestens einen Teil der ausgehenden Links (2b) des bestimmten Netz-Routers (1a, 1b, 1c) einem Inhalt des Routing-Buffers (5) abhängig von der zugeordneten Routing-Tabelle zuzuordnen, und dynamisch eine Anzahl von Ablenkungen zu schätzen, von denen erwartet wird, dass ein Objekt im Netz hinter dem bestimmten Netz-Router (1a, 1b, 1c) auf sie trifft, um seine Zieladresse zu erreichen; und

   e) die Werte der zugeordneten Routing-Tabelle zu aktualisieren, um die Anzahl der vom Objekt auf seinem ganzen Weg im Netz angetroffenen Ablenkungen zu schätzen.

2. Verfahren nach Anspruch 1, bei dem, bei Ankunft des Objekts bei einem Zieladressen-Router, der Zieladressen-Router eine Empfangsbestätigung an einen vorhergehenden Router sendet, die eine Anzahl von Ablenkungen anzeigt, die das Objekt zum Erreichen des Zieladressen-Routers angetroffen hat.

3. Verfahren nach Anspruch 2, bei dem der Schritt c) außerdem darin besteht, Netz-Routing-Tabellen zumindest zum Teil auf der Basis einer von einem oder mehreren benachbarten Routern (1a, 1b, 1c) empfangenen Empfangsbestätigung zu aktualisieren.

4. Verfahren nach Anspruch 2, bei dem die Schritte c) bis e) nacheinander für jeden Netz-Router (1a, 1b, 1c) durchgeführt werden.

5. Verfahren nach Anspruch 2, bei dem die Schritte c) bis e) gleichzeitig für jeden Netz-Router (1a, 1b, 1c) durchgeführt werden.

6. Verfahren nach Anspruch 1, bei dem die Schritte c) bis e) nacheinander für jeden Netz-Router (1a, 1b, 1c) durchgeführt werden.

7. Verfahren nach Anspruch 1, bei dem die Schritte c) bis e) gleichzeitig für jeden Netz-Router (1a, 1b, 1c) durchgeführt werden.

8. Verfahren nach Anspruch 7, bei dem der Schritt c) außerdem die Aktualisierung der Netz-Routing-Tabellen zumindest zum Teil auf der Basis einer von einem oder mehreren benachbarten Netz-Routern (1a, 1b, 1c) gesendeten Empfangsbestätigung enthält.

9. Computerlesbare Einrichtung, in der Befehle gespeichert sind, die, wenn sie von einer Informatik-Plattform ausgeführt werden, zu einem adaptiven Routing für die Objekte in einem Netz führen, wobei das Netz eine Vielzahl von Netz-Routern (1a, 1b, 1c) enthält, die durch Links (2) verbunden sind, wobei jeder Netz-Router (1a, 1b, 1c) Verbindungspunkte für eine Vielzahl von eingehenden Links (2a) und eine Vielzahl von ausgehenden Links (2b), eine innere Warteschlange (3), eine äußere Warteschlange (4) und einen Routing-Buffer (5) enthält, und wobei jeder Netz-Router (1a, 1b, 1c) geeignet ist, um auf eine zugeordnete Routing-Tabelle zuzugreifen, die Werte bezüglich einer Schätzung einer Anzahl von Ablenkungen enthält, auf die jedes vom Netz-Router (1a, 1b, 1c) kommende Objekt für eine gegebene Zieladresse trifft, wobei das adaptive Routing durchgeführt wird durch:

a) Erfassen, dass mindestens ein Objekt an mindestens einem Netz-Router (1a, 1b, 1c) angekommen ist,
b) Verschieben des mindestens einen Objekts entlang des Links (2) für eine Zeiteinheit als Antwort darauf, dass das mindestens eine Objekt sich auf einem beliebigen der Netz-Links (2) befindet; und Abwarten einer Zeiteinheit als Antwort auf eine Abwesenheit des mindestens einen Objekts auf einem beliebigen der Netz-Links (2);
c) Ausgabe des erfassten Objekts als Antwort darauf, dass ein Objekt sich auf einem eingehenden Link (2a) für einen bestimmten Netz-Router (1a, 1b, 1c) befindet, und als Antwort darauf, dass dessen Zieladresse der bestimmte Netz-Router (1a, 1b, 1c) ist; Überprüfen des Zustands der inneren Warteschlange (3) des bestimmten Netz-Routers (1a, 1b, 1c) als Antwort auf die Abwesenheit jeglichen Objekts, das den bestimmten Netz-Router (1a, 1b, 1c) als Zieladresse hat, auf den eingehenden Links (2a) des bestimmten Netz-Routers (1a, 1b, 1c); Übertragen des mindestens einen Objekts in den Routing-Buffer (5) des bestimmten Netz-Routers (1a, 1b, 1c) als Antwort darauf, dass die innere Warteschlange (3) des bestimmten Netz-Routers (1a, 1b, 1c) mindestens ein Objekt enthält; und Füllen des Buffers (5) mit einem oder mehreren beliebigen der in der äußeren Warteschlange (4) wartenden Objekte als Antwort darauf, dass der Routing-Buffer (5) des bestimmten Netz-Routers (1a, 1b, 1c) weniger als voll ist;
d) Zuordnen mindestens eines Teils der ausgehenden Links (2b) des bestimmten Netz-Routers (1a, 1b, 1c) zu einem Inhalt des Routing-Buffers (5) abhängig von der zugeordneten Routing-Tabelle, und dynamisches Schätzen eine Anzahl von Ablenkungen, von denen erwartet wird, dass ein Objekt im Netz hinter dem bestimmten Netz-Router (1a, 1b, 1c) auf sie trifft, um seine Zieladresse zu erreichen; und
e) Aktualisieren der Werte der zugeordneten Routing-Tabelle, um die Anzahl der vom Objekt auf seinem ganzen Weg im Netz angetroffenen Ablenkungen zu schätzen.

FIG.1

FIG. 2

FIG. 3A

FIG. 3B

**RÉFÉRENCES CITÉES DANS LA DESCRIPTION**

**Littérature non-brevet citée dans la description**

- **T. JAAKKOLA ; M. JORDAN ; S. SINGH.** Convergence of stochastic iterative dynamic programming algorithms. *Advances in Neural Information Processing Systems,* 1993, vol. 6, 703-710
- **C. WATKINS ; P. DAYAN.** Technical note on Q-Learning. *Machine Learning,* 1992, vol. 8 (3), 279-292
- **J. BOYAN ; M. LITTMAN.** Packet routing in dynamically changing networks : a reinforcement learning approach. *Advances in Neural Information Processing Systems,* 1993, vol. 6, 671-678
- Evaluation of an ATM LAN constructed with a cyclic deflection-routing network. **Nader Mir-Fakhraei.** Computer Communications. Elsevier Science Publishers, 15 Juin 1998, vol. 21, 662-669
- **Choudhury A K et al.** Effect of Contention Resolution Rules on the Performance of Deflection Routing. *Countdown to the New Millennium,* 1991
- *Proceedings of the Global Telecommunications Conference (Globecom),* 02 Décembre 1991, vol. 3, 1706-1711